# EUROPÄISCHE PATENTSCHRIFT

(11) **EP 3 238 984 B1**
(45) Veröffentlichungstag und Bekanntmachung des Hinweises auf die Patenterteilung: **18.12.2019**
(21) Anmeldenummer: 17161535.4
(22) Anmeldetag: 17.03.2017
(51) Int. Cl.: B60N 2/50, B60N 2/52

(54) **REGELBARES DÄMPFUNGSSYSTEM FÜR EINEN FAHRZEUGSITZ**
VARIABLE DAMPING SYSTEM FOR A VEHICLE SEAT
SYSTÈME D'AMORTISSEMENT RÉGLABLE POUR UN SIÈGE DE VÉHICULE AUTOMOBILE

(30) Priorität: 25.04.2016 DE 102016107626
(43) Veröffentlichungstag der Anmeldung: 01.11.2017
(73) Patentinhaber: GRAMMER AG, 92224 Amberg (DE)
(72) Erfinder: Haller, Erwin, 92262 Birgland (DE); Kolb, Jens, 92281 Königstein (DE); Krivenkov, Konstantin, 92224 Amberg (DE)
(74) Vertreter: Hannke, Christian

(56) Entgegenhaltungen:
- WO-A1-98/57130
- DE-A1-102008 058 409
- DE-T2- 60 026 661
- US-A- 5 390 121

## Beschreibung

Die Erfindung betrifft ein regelbares Dämpfungssystem für einen Fahrzeugsitz zum Dämpfen einer Bewegung eines sitzteilseitigen Oberteils relativ zu einem karosserieseitigen Unterteil in wenigstens einer Raumrichtung (X, Y, Z), wobei zum Dämpfen mindestens ein zwischen dem sitzteilseitigen Oberteil und dem karosserieseitigen Unterteil angeordnetes durch eine Regeleinrichtung regelbares und einen Gesamtdämpfungsweg aufweisendes Dämpfungselement vorgesehen ist.

Insbesondere bei geländegängigen Fahrzeugen, wie Baumaschinen und Traktoren, hat der Fahrzeugsitz großen Einfluss auf den Fahrkomfort. Übermäßige Schwingungen, Stöße und Bewegungen, welche von der Fahrbahnoberfläche über den Fahrzeugsitz auf die sich auf dem Sitz befindlichen Person übertragen werden, können zu Ermüdung und längerfristig auch zu einer Beeinträchtigung der Gesundheit, wie beispielsweise Rückenschmerzen oder Knochenverschleiß, der Person führen. Üblicherweise werden Dämpfungs-/ Federungssysteme eingesetzt, um derartige Einflüsse zu minimieren. Hierzu sind verschiedene prinzipielle Federungsvarianten bekannt, die sich hinsichtlich Komplexität und Energiebedarf unterscheiden: passive, semi-aktive und aktive Federungssysteme. Bei passiven Fahrzeugsitzen sind die Eigenschaften der Systemkomponenten konstruktiv vorgegeben und können während des Betriebs nicht verändert werden. Bei semi-aktiven Federungssystemen können die dissipativen Eigenschaften der Sitzfederung abhängig von der jeweiligen Situation gezielt beeinflusst werden. Entweder kann die Härte des Dämpfers verstellt und/oder die Steifigkeit der Feder angepasst werden. Bei aktiven Systemen kann durch geeignete Stellglieder zusätzlich Energie in das System eingebracht werden.

Solche Dämpfungs-/ Federungssysteme weisen in der Regel einen maximalen Dämpfungs-/ bzw. Federweg auf. Bei Fahrten abseits befestigter Straßen können die auf das Fahrzeug bzw. den Fahrzeugsitz wirkenden Kräfte derart groß sein, dass das Dämpfungs-/ Federungssystem große Auslenkungen erfährt. Durch die endlichen mechanischen Begrenzungen der üblichen Dämpfungs-/ Federungssysteme können große auf den Sitz wirkende Kräfte einen Endanschlag des Dämpfungs-/ Federungssystem bewirken. Um derartige Endanschläge zu vermeiden, sind unterschiedliche Dämpfersysteme bekannt. Es sind beispielsweise passive Dämpfer mit federwegabhängiger oder federungsgeschwindigkeitsabhängiger Dämpfkraft bekannt. Ferner sind aktiv oder semiaktiv regelbare Dämpfertechnologien im Stand der Technik bekannt. Regelbare Dämpfertechnologien basieren beispielsweise auf elektro-/ bzw. magnetorheologischen Systemen oder auf elektrisch oder mechanisch gesteureter Durchflussänderung des Dämpfers. Bekannte Algorithmen zur aktiven Regelung der Dämpfung sind beispielsweise der Skyhook- Rebound-Control- oder der Huang Regelalgorithmus.

Ein reiner Geschwindigkeitsabhängiger passiver oder geregelter Dämpfer nutzt nicht den noch zur Verfügung stehenden Federweg, welcher zum einen noch genutzt werden könnte beziehungsweise nicht mehr vorhanden ist. Diese Dämpferart ist entweder für den Worst-Case, in welchem jeder Anschlag in jeder möglichen Sitzeinstellung vermieden wird, oder auf einen ausreichenden Federweg ausgelegt. In dem ersten Fall wird die Einstellung in der Regel als zu hart empfunden und in dem zweiten Fall können unangenehme Anschläge in den Randlagen nicht vermieden werden. Wegabhängige passive Dämpfer schaffen zum Ende des Federwegs eine härtere Dämpfung, jedoch ist diese Dämpfung auch beim Rückfedern, in welchem wieder ausreichend Federweg vorhanden ist ineffizient und unangenehm wirksam.

Das Dokument US5390121 offenbart ein regelbares Dämpfungssystem und ein Verfahren zum Regeln eines solchen Systems, wobei eine Dämpfungskraft abhängig vom Betrag einer Geschwindigkeit, von der Bewegungsrichtung und der aktuellen Position eines Oberteils relativ zu einem Unterteil einstellbar ist.

Eine Dämpfungsregelung sollte überdies auch eine nutzerspezifische Dämpfervoreinstellung ermöglichen.

Es ist die Aufgabe der vorliegenden Erfindung ein Dämpfersystem zur Verfügung zu stellen, welches die vorangehend genannten Nachteile überwindet. Des Weiteren ist es die Aufgabe einen Fahrersitz mit einem solchen Dämpfersystem zur Verfügung zu stellen. Eine weitere Aufgabe der Erfindung ist es, ein Verfahren zum Regeln eines regelbaren Dämpfungssystems zur Verfügung zu stellen, welches die vorangehend genannten Nachteile überwindet.

Diese Aufgabe wird gelöst durch ein regelbares Dämpfungssystem für einen Fahrzeugsitz zum Dämpfen einer Bewegung eines sitzteilseitigen Oberteils relativ zu einem karosserieseitigen Unterteil in wenigstens einer Raumrichtung (X, Y, Z), wobei zum Dämpfen mindestens ein zwischen dem sitzteilseitigen Oberteil und dem karosserieseitigen Unterteil angeordnetes durch eine Regeleinrichtung regelbares Dämpfungselement vorgesehen ist. Das Dämpfungssystem zeichnet sich weiterhin dadurch aus, dass eine erste Dämpfungskraft des Dämpfungselements durch die Regeleinrichtung einstellbar ist, wobei diese erste Dämpfungskraft durch die Regeleinrichtung, anhand eines Gesamtdämpfungswegs des Dämpfungselements, einer durch eine Dämpfungs-Einstelleinrichtung voreinstellbaren Grunddämpfungskraft, einer durch eine Sensoreinrichtung messbaren Position des sitzteilseitigen Oberteils relativ zu dem karosserieseitigen Unterteil und einer Bewegungsrichtung des sitzteilseitigen Oberteils relativ zu dem karosserieseitigen Unterteil, bestimmbar ist, wobei die Bewegungsrichtung aus zumindest zwei durch die Sensoreinrichtung messbaren, zeitlich aufeinanderfolgenden Positionen des sitzteilseitigen Oberteils relativ zu dem karosserieseitigen Unterteil bestimmbar ist.

Das Dämpfungselement kann hierbei auf einer beliebigen Dämpfertechnologie basieren. Denkbar wären elektro-/ bzw. magnetorheologische Dämpfer oder aber auch Hydraulikdämpfer mit elektrisch oder mechanisch gesteuertem Durchfluss oder aber auch Hydraulikdämpfer in Kombination mit einer Hydraulikfluidpumpe. Demnach kann die Dämpfung vorzugsweise aktiv bzw. semiaktiv sein. Die Dämpferkraft wird oft auch als Dämpfungsintensität bezeichnet. Das Dämpferverhalten des erfindungsgemäßen Dämpfungssystems kann also in Abhängigkeit von der nutzerspezifischen Grunddämpfungskraft, der Position und der Bewegung des sitzteilseitigen Oberteils vorzugsweise innerhalb des zur Verfügung stehenden Dämpfungswegs eingestellt/geregelt werden. Die erste Dämpfungskraft ist demnach unabhängig vom Betrag der Geschwindigkeit, aber abhängig von der Bewegungsrichtung und der aktuellen Position des sitzteilseitigen Oberteils relativ zu dem karosserieseitigen Unterteil, einstellbar. Die erfindungsgemäße Bestimmung der ersten Dämpfungskraft hat den Vorteil, dass bereits bei geringen Ein-Ausfedergeschwindigkeiten eine gewisse Dämpfkraft eingestellt ist.

Erfindungsgemäß ist das regelbare Dämpfungssystem zum Dämpfen einer Bewegung eines sitzteilseitigen Oberteils relativ zu einem karosserieseitigen Unterteil in wenigstens einer Raumrichtung (X, Y, Z) ausgelegt. Demnach kann eine Dämpfung von Schwingungen in vertikaler Richtung (Z) aber auch eine Dämpfung von Horizontalschwingungen (X, Y) erfolgen.

Durch das regelbare Dämpfungssystem kann somit ein ausschließlich vertikal wirkendes Dämpfungssystem, ein Horizontaldämpfungssystem oder ein Dämpfungssystem, welches in alle drei Raumrichtungen (X, Y, Z) wirkt, bereitgestellt werden.

Im Folgenden werden die Begriffe Höhenposition, minimal einstellbare Höhenposition, maximal einstellbare Höhenposition und Höhen-Einstelleinrichtung verwendet. Diese Begriffe werden hierbei nicht nur in Bezug zu einer vertikalen Auslenkung (Z) verstanden, sondern gelten analog auch in jeder anderen Raumrichtung (X, Y). Eine entsprechende Höhenposition bezieht sich somit auf den jeweiligen Dämpfungsweg des Dämpfungselements.

Vorzugsweise ist eine maximale Verlagerung der Position des sitzteilseitigen Oberteils relativ zu dem karosserieseitigen Unterteil durch den Gesamtdämpfungsweg des Dämpfungselements gegeben, welcher durch ein oberes und ein unteres Dämpfungswegende begrenzt ist. Bevorzugt ist eine den Sollwert der Regelung darstellende Höhenposition des sitzteilseitigen Oberteils relativ zu dem karosserieseitigen Unterteil durch eine Höhen-Einstelleinrichtung einstellbar. Idealerweise liegt eine maximal einstellbare Höhenposition in einem Bereich des Gesamtdämpfungswegs, welcher sich bevorzugt zwischen einer Gesamtdämpfungswegmitte und dem oberen Dämpfungswegende erstreckt. Überdies ist es vorteilhaft, wenn eine minimal einstellbare Höhenposition in einem Bereich des Gesamtdämpfungswegs liegt, welcher sich zwischen einer Gesamtdämpfungswegmitte und dem unteren Dämpfungswegende erstreckt. Demnach ist also die voreingestellte Höhenposition der Sollwert der Regelung und die aktuelle Position sitzteilseitigen Oberteils relativ zu dem karosserieseitigen Unterteil ist der Istwert der Regelung. Im Folgenden wird unter der Bezeichnung oben eine Richtung zu dem sitzteilseitigen Oberteil beziehungsweise unter der Bezeichnung unten eine Richtung zu dem karosserieseitigen Unterteil. Die durch die Regeleinrichtung eingestellte erste Dämpfungskraft ist bevorzugt anhand einer voreingestellten nutzerspezifischen Grunddämpfungskraft, einem Restdämpfungsweg, welcher durch den Gesamtdämpfungsweg und der aktuellen Position des sitzteilseitigen Oberteils bestimmbar ist, einer voreingestellten Höhenposition und der Bewegungsrichtung des sitzteilseitigen Oberteils bestimmbar. Beispielsweise weist ein vertikal gefederter Sitz einen Gesamtdämpfungsweg von 180 mm auf. Der Bereich des Gesamtdämpfungswegs, welcher für die Höhenverstellung verwendet wird und durch die maximale und minimale einstellbare Höhenposition begrenzt ist beträgt z.B. 80 mm. Somit kommt ein günstigster zur Verfügung stehender Federweg von 90 mm in beide Richtungen beziehungsweise +-50 mm und -+130 mm in ungünstigen Fällen zustande.

Nach einer bevorzugten Ausführungsform ist bei einer Verlagerung der Position des sitzteilseitigen Oberteils ausgehend von der Höhenposition die durch die Regeleinrichtung einstellbare erste Dämpfungskraft des Dämpfungselements innerhalb eines Komfortbereichs des Gesamtdämpfungswegs kleiner als außerhalb des Komfortbereichs. Der Komfortbereich ist dabei durch eine obere und eine untere Komfortgrenze begrenzt. Idealerweise ist der Komfortbereich ein Teilbereich des Bereichs des Gesamtdämpfungswegs, welcher durch die maximal einstellbare Höhenposition und die minimal einstellbare Höhenposition begrenzt ist. Bevorzugt ist die erste Dämpfungskraft innerhalb des Komfortbereichs konstant. Denkbar wäre auch, dass die erste Dämpfungskraft mit dem Abstand zwischen der Position des sitzteilseitigen Oberteils und der Höhenposition ansteigend bzw. fallend ist. Vorteilhaft kann der Komfortbereich durch Parametrierung gemäß individuellen Präferenzen oder an die Kinematik des Sitzes angepasst werden, so dass ein komfortabler weicher Mittenbereich subjektiv fühlbar ist. Dabei ist es vorteilhaft, wenn bei einer Verlagerung der Position des sitzteilseitigen Oberteils ausgehend von der maximalen oder der minimalen Höhenposition der Komfortbereich auf die maximale beziehungsweise die minimale Höhenposition beschränkt ist.

Nach einer weiteren bevorzugten Ausführungsform wächst bei einer Verlagerung der Position des sitzteilseitigen Oberteils, ausgehend von der Höhenposition, die durch die Regeleinrichtung einstellbare erste Dämpfungskraft des Dämpfungselements, außerhalb des Komfortbereichs des Gesamtdämpfungswegs, linear mit dem Abstand zwischen der Position des sitzteilseitigen Oberteils und der Höhenposition an. Es wäre jedoch auch ein Anwachsen gemäß einer anderen Polynomfunktion denkbar.

Nach einer weiteren besonders bevorzugten Ausführungsform ist bei einer Verlagerung der Position des sitzteilseitigen Oberteils, in Richtung zu der Höhenposition, durch die Regeleinrichtung eine Dämpfungskraft des Dämpfungselements einstellbar, welche lediglich der voreingestellten Grunddämpfungskraft entspricht. Demnach kann bei einer Rückbewegung des sitzteilseitigen Oberteils auf die positionsunabhängige vorgewählte Grunddämpfungskraft zurückgestellt werden, wodurch das Zurückfedern sanfter empfunden wird. Gleichzeit hat eine Person auf dem Sitz subjektiv das Gefühl zum Ende des Dämpfungswegs hin durch eine Dämpfungserhöhung geschützt zu werden. Ferner wird durch diese Ansteuerart die Höhenposition des Sitzes stabilisiert, da der Sitz weicher zur Ausgangslage zurückfedert.

Gemäß einer weiteren bevorzugten Ausführungsform ist durch die Regeleinrichtung eine zweite Dämpfungskraft des Dämpfungselements einstellbar. Vorzugsweise ist diese zweite Dämpfungskraft anhand des Gesamtdämpfungswegs, der voreinstellbaren Grunddämpfungskraft, der Position des sitzteilseitigen Oberteils relativ zu dem karosserieseitigen Unterteil, der Bewegungsrichtung, dem Betrag der Geschwindigkeit und eines Restdämpfungswegs des sitzteilseitigen Oberteils relativ zu dem karosserieseitigen Unterteil bestimmbar. Idealerweise ist der Restdämpfungsweg aus dem Gesamtdämpfungsweg und der Position des sitzteilseitigen Oberteils relativ zu dem karosserieseitigen Unterteil bestimmbar. Vorzugsweise ist die Geschwindigkeit aus zumindest zwei zeitlich aufeinanderfolgenden Positionen des sitzteilseitigen Oberteils relativ zu dem karosserieseitigen Unterteil bestimmbar. Bevorzugt ist eine Gesamtdämpfungskraft des Dämpfungselements aus der Summe von erster und zweiter Dämpfungskraft gegeben. Demzufolge kann zur Vermeidung/Vorbeugung von Endanschlägen die momentane Geschwindigkeit des sitzteilseitigen Oberteils mit dem noch zur Verfügung stehenden Dämpfungsweg verglichen und ggf. eine zusätzliche zweite Dämpfungskraft der ersten Dämpfungskraft überlagert werden. Die erfindungsgemäße Bestimmung der ersten Dämpfungskraft hat den Vorteil, dass bereits bei geringen Ein-/ Ausfedergeschwindigkeiten eine gewisse Dämpfkraft eingestellt ist. Eine Überlagerung der ersten und der zweiten Dämpfungskraft hat zum Vorteil, dass der progressive Übergang in die harte Bedämpfung zum Dämpfungswegende hin oder auch bei höheren Geschwindigkeiten weniger stark und somit angenehmer ausgeprägt ist. Der Übergang in die endlagen- bzw. geschwindigkeitsabhängige Dämpfung kann somit homogener (günstig für die Isolationswirkung) ausgelegt werden. Umgekehrt kann bei harter Dämpfervorwahl bei Auftreten eines plötzlichen Stoßes die Dämpfung auf weich geschaltet werden, um möglichst wenig Energie auf das sitzteilseitige Oberteil weiter zu leiten, wenn ausreichend Federweg vorhanden ist. Es ist somit auch eine Überlagerung der ersten Dämpfungskraft im negativen Sinn möglich.

Vorzugsweise ist bei einer Verlagerung der Position des sitzteilseitigen Oberteils relativ zu dem karosserieseitigen Unterteil, ausgehend von der maximalen Höhenposition in Richtung des oberen Dämpfungswegendes oder bei einer Verlagerung der Position des sitzteilseitigen Oberteils relativ zu dem karosserieseitigen Unterteil, ausgehend von der minimalen Höhenposition in Richtung des unteren Dämpfungswegendes durch die Regeleinrichtung eine Dämpfungskraft des Dämpfungselements einstellbar, welche um einen Endanschlagschutzfaktor erhöht ist. Idealerweise ist bei einer Verlagerung der Position des sitzteilseitigen Oberteils in entgegengesetzter Richtung durch die Regeleinrichtung eine Dämpfungskraft des Dämpfungselements ohne Endanschlagschutzfaktor einstellbar. Demnach kann ein Endanschlag des sitzteilseitigen Oberteils effektiv unterbunden werden, wodurch sich ein erhöhter Sitzkomfort ergibt. Bevorzugt ist bei einer Verlagerung in entgegengesetzter Richtung der Endanschlagschutzfaktor nicht wirksam. Durch eine solche Maßnahme kann das sitzteilseitige Oberteil möglichst schnell in die Sollposition zurückgeführt werden, wodurch sich eine weitere Verbesserung des Sitzkomforts ergibt.

Nach einer weiteren bevorzugten Ausführungsform sind durch die Regeleinrichtung eine charakteristische Geschwindigkeiten hinsichtlich einer Resonanzüberhöhung einer Schwingung des sitzteilseitigen Oberteils relativ zu dem karosserieseitigen Unterteil identifizierbar. Bevorzugt ist bei einer Identifikation einer solchen charakteristischen Geschwindigkeit eine erhöhte Dämpfungskraft einstellbar. Durch die Messung der Position und Geschwindigkeit des sitzteilseitigen Oberteils relativ zu dem karosserieseitigen Unterteil lässt sich idealerweise die Anregung aus dem Reaktionsverhalten analysieren. Bei den identifizierten, im Resonanzverhalten charakteristischen Geschwindigkeiten kann somit die Dämpferleistung erhöht werden. Dadurch kann beispielsweise der Faktor einer typische Resonanzüberhöhung der Schwingungsamplitude von ca. 2,5 auf unter 1,5 reduziert werden.

Nach einer weiteren bevorzugten Ausführungsform umfasst das regelbare Dämpfungssystem einen Beschleunigungssensor. Anregungen werden von dem karosserieseitigen Unterteil auf das sitzteilseitigen Oberteil übertragen. Demnach ist es bevorzugt, wenn der Beschleunigungssensor an dem karosserieseitigen Unterteil angeordnet ist. Durch eine solche vorteilhafte Nutzung von Beschleunigungswerten durch die Regeleinrichtung ist es möglich, die für die Regelung zu bestimmenden notwendigen Geschwindigkeiten zeitlich effektiver zu bestimmen, wodurch eine schnellere Reaktion des Dämpfungssystems auf plötzlich auftretende Auslenkungen des sitzteilseitigen Oberteils relativ zu dem karosserieseitigen Unterteil erreicht werden kann. Außerdem ermöglicht der Beschleunigungssensor eine Identifikation der Fahrerbewegung, d.h. es kann unterschieden werden, ob eine Bewegung des Oberteils infolge der Fahrerbewegung und/oder infolge einer Anregung durch Schwingungen des Unterteils erfolgt.

Die Aufgabe wird weiterhin gelöst durch einen Fahrzeugsitz mit einem regelbaren Dämpfungssystem nach einem der vorhergehenden Ansprüche.

Die Aufgabe wird ebenso gelöst durch ein Verfahren zum Regeln eines regelbaren Dämpfungssystems für einen Fahrzeugsitz zum Dämpfen einer Bewegung eines sitzteilseitigen Oberteils relativ zu einem karosserieseitigen Unterteil in wenigstens einer Raumrichtung (X, Y, Z), wobei zum Dämpfen mindestens ein zwischen dem sitzteilseitigen Oberteil und dem karosserieseitigen Unterteil angeordnetes durch eine Regeleinrichtung regelbares Dämpfungselement vorgesehen ist, wobei das Verfahren folgende Schritte umfasst:
Messen der aktuellen Position des sitzteilseitigen Oberteils relativ zu dem karosserieseitigen Unterteil durch eine Sensoreinrichtung;
Bestimmen einer Bewegungsrichtung des sitzteilseitigen Oberteils relativ zu dem karosserieseitigen Unterteil durch die Regeleinrichtung aus zumindest zwei zeitlich aufeinanderfolgend gemessenen Positionen des sitzteilseitigen Oberteils relativ zu dem karosserieseitigen Unterteil;
Einstellen einer ersten Dämpfungskraft des Dämpfungselements durch die Regeleinrichtung, wobei die erste Dämpfungskraft durch die Regeleinrichtung in Abhängigkeit von einem Gesamtdämpfungsweg, der voreinstellten Grunddämpfungskraft, der Position des sitzteilseitigen Oberteils relativ zu dem karosserieseitigen Unterteil und der Bewegungsrichtung des sitzteilseitigen Oberteils relativ zu dem karosserieseitigen Unterteil bestimmt wird.

Vorzugsweise ist eine maximale Verlagerung der Position des sitzteilseitigen Oberteils relativ zu dem karosserieseitigen Unterteil durch den Gesamtdämpfungsweg des Dämpfungselements gegeben, welcher durch ein oberes und ein unteres Dämpfungswegende begrenzt ist. Bevorzugt ist eine den Sollwert der Regelung darstellende Höhenposition des sitzteilseitigen Oberteils relativ zu dem karosserieseitigen Unterteil durch eine Höhen-Einstelleinrichtung einstellbar. Idealerweise liegt eine maximal einstellbare Höhenposition in einem Bereich des Gesamtdämpfungswegs, welcher sich bevorzugt zwischen einer Gesamtdämpfungswegmitte und dem oberen Dämpfungswegende erstreckt. Überdies ist es vorteilhaft wenn eine minimal einstellbare Höhenposition in einem Bereich des Gesamtdämpfungswegs liegt, welcher sich zwischen einer Gesamtdämpfungswegmitte und dem unteren Dämpfungswegende erstreckt.

Nach einer bevorzugten Ausführungsform ist bei einer Verlagerung der Position des sitzteilseitigen Oberteils ausgehend von der Höhenposition, die durch die Regeleinrichtung eingestellte erste Dämpfungskraft des Dämpfungselements innerhalb eines Komfortbereichs des Gesamtdämpfungswegs kleiner als außerhalb des Komfortbereichs. Der Komfortbereich ist dabei durch eine obere und eine untere Komfortgrenze begrenzt. Idealerweise ist der Komfortbereich ein Teilbereich des Bereichs des Gesamtdämpfungswegs, welcher durch die maximal einstellbare Höhenposition und die minimal einstellbare Höhenposition begrenzt ist. Bevorzugt ist die erste Dämpfungskraft innerhalb des Komfortbereichs konstant. Denkbar wäre auch, dass die erste Dämpfungskraft mit dem Abstand zwischen der Position des sitzteilseitigen Oberteils und der Höhenposition ansteigend bzw. fallend ist. Vorteilhaft kann der Komfortbereich durch Parametrierung gemäß individuellen Präferenzen oder an die Kinematik des Sitzes angepasst werden, so dass ein komfortabler weicher Mittenbereich subjektiv fühlbar ist. Dabei ist es vorteilhaft wenn bei einer Verlagerung der Position des sitzteilseitigen Oberteils ausgehend von der maximalen oder der minimalen Höhenposition der Komfortbereich auf die maximale beziehungsweise die minimale Höhenposition beschränkt ist.

Nach einer weiteren bevorzugten Ausführungsform wächst bei einer Verlagerung der Position des sitzteilseitigen Oberteils, ausgehend von der Höhenposition, die durch die Regeleinrichtung eingestellte erste Dämpfungskraft des Dämpfungselements, außerhalb des Komfortbereichs des Gesamtdämpfungswegs, linear mit dem Abstand zwischen der Position des sitzteilseitigen Oberteils und der Höhenposition an.

Nach einer weiteren besonders bevorzugten Ausführungsform wird bei einer Verlagerung der Position des sitzteilseitigen Oberteils, in Richtung zu der Höhenposition, durch die Regeleinrichtung eine Dämpfungskraft des Dämpfungselements eingestellt, welche lediglich der voreingestellten Grunddämpfungskraft entspricht.

Gemäß einer weiteren bevorzugten Ausführungsform wird durch die Regeleinrichtung eine zweite Dämpfungskraft des Dämpfungselements eingestellt. Vorzugsweise wird diese zweite Dämpfungskraft anhand des Gesamtdämpfungswegs, der voreinstellbaren Grunddämpfungskraft, der Position des sitzteilseitigen Oberteils relativ zu dem karosserieseitigen Unterteil, der Bewegungsrichtung, dem Betrag der Geschwindigkeit und eines Restdämpfungswegs des sitzteilseitigen Oberteils relativ zu dem karosserieseitigen Unterteil bestimmt. Idealerweise ist der Restdämpfungsweg aus dem Gesamtdämpfungsweg und der Position des sitzteilseitigen Oberteils relativ zu dem karosserieseitigen Unterteil bestimmt. Vorzugsweise wird die Geschwindigkeit aus zumindest zwei zeitlich aufeinanderfolgenden Positionen des sitzteilseitigen Oberteils relativ zu dem karosserieseitigen Unterteil bestimmt. Bevorzugt ist eine Gesamtdämpfungskraft des Dämpfungselements aus der Summe von erster und zweiter Dämpfungskraft gegeben. Denkbar wäre allerdings auch, dass die Gesamtdämpfungskraft des Dämpfungselements aus dem Produkt von erster und zweiter Dämpfungskraft gegeben ist.

Vorzugsweise wird bei einer Verlagerung der Position des sitzteilseitigen Oberteils, ausgehend von der maximalen Höhenposition in Richtung des oberen Dämpfungswegendes oder bei einer Verlagerung der Position des sitzteilseitigen Oberteils ausgehend von der minimalen Höhenposition in Richtung des unteren Dämpfungswegendes durch die Regeleinrichtung eine Dämpfungskraft des Dämpfungselements eingestellt, welche um einen Endanschlagschutzfaktor erhöht ist. Idealerweise wird bei einer Verlagerung der Position in entgegengesetzter Richtung eine Dämpfungskraft des Dämpfungselements ohne Endanschlagschutzfaktor eingestellt.

Nach einer weiteren bevorzugten Ausführungsform werden durch die Regeleinrichtung eine charakteristische Geschwindigkeiten hinsichtlich einer Resonanzüberhöhung einer Schwingung des sitzteilseitigen Oberteils relativ zu dem karosserieseitigen Unterteil identifiziert. Bevorzugt wird dann bei einer Identifikation einer solchen charakteristische Geschwindigkeit eine erhöhte Dämpfungskraft einstellt.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig.1: eine Seitenansicht eines Fahrzeugsitzes mit einem Dämpfungssystem;
- Fig.2a, b, c: je ein Diagramm der ersten Dämpfungskraft in Abhängigkeit von der Position des sitzteilseitigen Oberteils relativ zu dem karosserieseitigen Unterteil;
- Fig.3: ein Diagramm der ersten Dämpfungskraft in Abhängigkeit von der Position des sitzteilseitigen Oberteils relativ zu dem karosserieseitigen Unterteil gemäß einer weiteren Ausführungsform;
- Fig.4: eine Algorithmus-Struktur zur Bestimmung der ersten Dämpfungskraft;
- Fig. 5: eine Algorithmus-Struktur zur Bestimmung der zweiten Dämpfungskraft
- Fig. 6: ein Diagramm zur Resonanzunterdrückung bei charakteristischen Geschwindigkeiten;
- Fig. 7: ein Diagramm der zweiten Dämpfungskraft in Abhängigkeit von der Position des sitzteilseitigen Oberteils relativ zu dem karosserieseitigen Unterteil gemäß einer weiteren Ausführungsform.

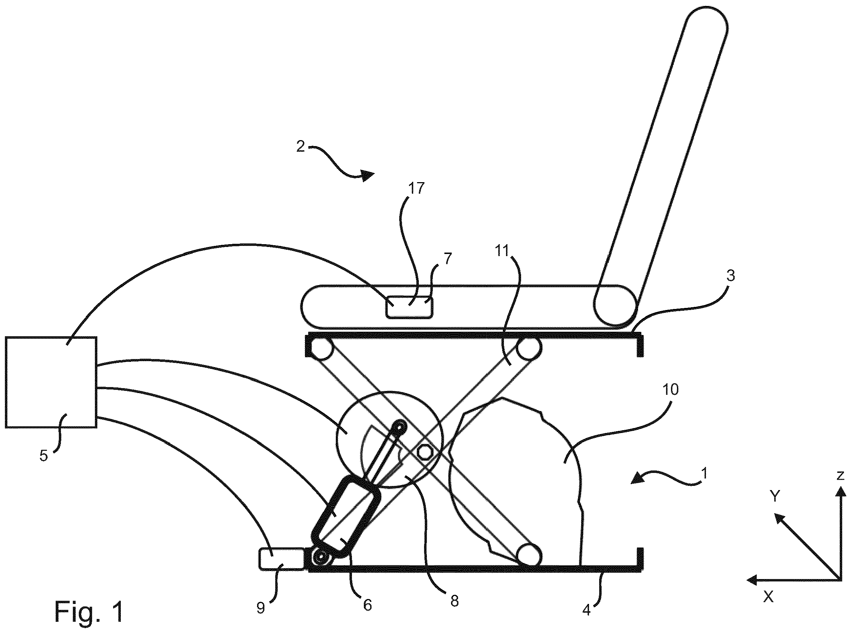

In Fig. 1 ist ein Fahrzeugsitz (2) mit einem regelbaren Dämpfungssystem (1) zum Dämpfen einer Bewegung eines sitzteilseitigen Oberteils (3) relativ zu einem karosserieseitigen Unterteil (4) in wenigstens einer Raumrichtung (X, Y, Z), gemäß einer möglichen Ausführungsform gezeigt. Das Dämpfungssystem umfasst eine zwischen dem sitzteilseitigen Oberteil (3) und dem karosserieseitigen Unterteil (4) angeordnetes durch eine Regeleinrichtung (5) regelbares Dämpfungselement (6).

Zwischen dem sitzteilseitigen Oberteil (3) und dem karosserieseitigen Unterteil (4) sind weiterhin ein Scherengestell (11) und ein Federelement (10) angeordnet. In dieser Ausführungsform ist das Federelement (10) als pneumatisches Federelement ausgeführt. Das Dämpfungselement (6) ist dabei zwischen einem unteren Anlenkpunkt des ersten Scherenarms und dem zweiten Scherenarm angeordnet. An dem unteren Anlenkpunkt kann optional auch ein Beschleunigungssensor (9) angeordnet werden. Die Beschleunigung des sitzteilseitigen Oberteils (3) relativ zu einem karosserieseitigen Unterteil (4) kann dabei aus der Winkelbeschleunigung der Rotation in dem Anlenkpunkt bestimmt werden.

Das Dämpfungssystem (1) umfasst weiterhin eine Dämpfungs-Einstelleinrichtung (7), mit welcher eine Grunddämpfungskraft spezifisch durch einen Nutzer des Sitzes voreinstellbar ist. Die aktuelle Position des sitzteilseitigen Oberteils (3) relativ zu dem karosserieseitigen Unterteil (4) kann durch eine Sensoreinrichtung (8) gemessen werden. In diesem Ausführungsbeispiel ist die Sensoreinrichtung (8) als ein rotierender Höhensensor ausgebildet. Eine Verlagerung des sitzteilseitigen Oberteils (3) relativ zu dem karosserieseitigen Unterteil (4) bewirkt dabei ein Rotation in dem Höhensensor, wobei aus dem Rotationswinkel die Verlagerungsstrecke und somit die Position des sitzteilseitigen Oberteils (3) relativ zu dem karosserieseitigen Unterteil (4) bestimmbar ist.

Die Sensoreinrichtung (8), die Dämpfungs-Einstelleinrichtung (7), und das Dämpfungselement sind mit einer Regeleinrichtung (5) verbunden. Für den Fall, dass die Reglung auf Beschleunigungsdaten des sitzteilseitigen Oberteils (3) basiert, ist selbstverständlich auch der Beschleunigungssensor (9) mit der Regeleinrichtung (5) verbunden.

Das Dämpfungssystem (1) umfasst weiterhin eine Höhen-Einstelleinrichtung (17), mit welcher eine Höhenposition des sitzteilseitigen Oberteils (3) relativ zu dem karosserieseitigen Unterteil (4) einstellbar ist. Die Höhen-Einstelleinrichtung (17) kann beispielsweise weiterhin eine regelbare Pumpe umfassen, welche mit dem pneumatischen Federelement (10) verbunden ist. Die Höheneinstellung würde somit durch das Zu- bzw. Abführen von Luft in oder aus dem pneumatischen Federelement (10) realisiert. Alternativ wären auch zusätzliche Stellglieder denkbar.

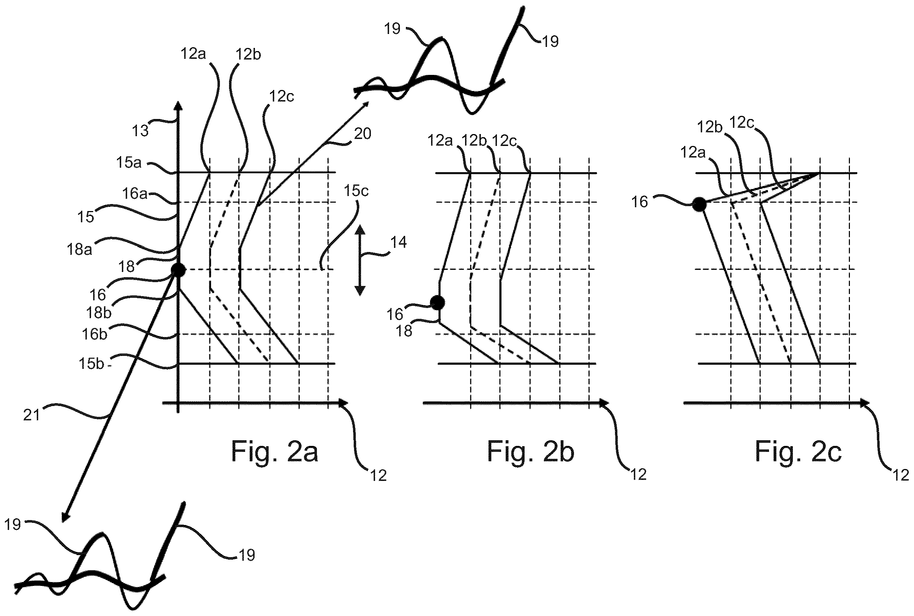

Die Figuren 2a, 2b und 2c zeigen je ein Diagramm der ersten Dämpfungskraft (12) in Abhängigkeit von der Position (13) des sitzteilseitigen Oberteils (3) relativ zu dem karosserieseitigen Unterteil (4). Die Abszisse beschreibt dabei die erste Dämpfungskraft (12) und die Ordinate die Position (13) des sitzteilseitigen Oberteils (3) relativ zu dem karosserieseitigen Unterteil (4). Die erste Dämpfungskraft (12) des Dämpfungselements (6) wird anhand einer durch die Dämpfungs-Einstelleinrichtung (7) voreinstellbaren Grunddämpfungskraft, der durch eine Sensoreinrichtung (8) messbaren Position (13) des sitzteilseitigen Oberteils (3) relativ zu dem karosserieseitigen Unterteil (4) und der Bewegungsrichtung (14) des sitzteilseitigen Oberteils (3) relativ zu dem karosserieseitigen Unterteil (4) durch die Regeleinrichtung (5) eingestellt. Die Bewegungsrichtung (14) wird aus zumindest zwei durch eine Sensoreinrichtung (8) messbaren, zeitlich aufeinanderfolgenden Positionen (13) des sitzteilseitigen Oberteils (3) relativ zu dem karosserieseitigen Unterteil (4) bestimmt.

Die Graphen (12a, 12b, 12c) stellen den Verlauf der ersten Dämpfungskraft (12) mit unterschiedlich voreingestellter Grunddämpfungskraft dar. Eine maximale Verlagerung der Position (13) des sitzteilseitigen Oberteils (3) relativ zu dem karosserieseitigen Unterteil (4) ist durch einen maximalen Dämpfungsweg (15) des Dämpfungselements (6) gegeben. Der maximale Dämpfungsweg (15) ist dabei durch ein oberes (15a) und ein unteres Dämpfungswegende (15b) begrenzt. Die Höhenposition (16) des sitzteilseitigen Oberteils (3) relativ zu dem karosserieseitigen Unterteil (4), welche durch die Höhen-Einstelleinrichtung (17) einstellbar ist, stellt den Sollwert der Regelung dar. Eine maximal einstellbare Höhenposition (16a) liegt in einem Bereich des Gesamtdämpfungswegs (15), welcher sich zwischen einer Gesamtdämpfungswegmitte (15c) und dem oberen Dämpfungswegende (15a) erstreckt und eine minimal einstellbare Höhenposition (16b) liegt in einem Bereich des Gesamtdämpfungswegs (15), welcher sich zwischen einer Gesamtdämpfungswegmitte (15c) und dem unteren Dämpfungswegende (15a) erstreckt.

In Fig. 2a ist die Höhenposition (16) in der Dämpfungswegmitte (15c) voreingestellt. Bei einer Verlagerung der Position (13) in Richtung zu dem unteren Dämpfungswegende(15b) nimmt die Dämpfungskraft (12) stärker zu als bei einer Verlagerung in Richtung zu dem oberen Dämpfungswegende (15a). Dies hat einen erhöhten Sitzkomfort zur Folge, da ein Anschlag bei einer Bewegung nach unten subjektiv als unangenehmer empfunden wird als ein oberer Endanschlag.

In Fig. 2b ist die Höhenposition (16) zwischen der Gesamtdämpfungswegmitte (15c) und dem unteren Dämpfungswegende (15b) voreingestellt. Eine solche Voreinstellung hat einen stärkeren Anstieg der ersten Dämpfungskraft (12) bei einer Verlagerung der Position (13) in Richtung zu dem unteren Dämpfungswegende (15b), da weniger Dämpfungsweg zur Verfügung steht.

In Fig. 2c entspricht die voreingestellt Höhenposition (16) der maximalen Höhenposition (16a). In diesem Fall steht weniger Dämpfungsweg in Richtung zu dem oberen Dämpfungswegende (15a) zur Verfügung. Demnach weist die erste Dämpfungskraft (12) einen stärkeren Anstieg bei einer Verlagerung der Position (13) nach oben in Richtung zu dem oberen Dämpfungswegende (15a) auf.

Der Anstieg der ersten Dämpfungskraft (12) hinsichtlich einer Bewegungsrichtung des sitzteilseitigen Oberteils (3) relativ zu dem karosserieseitigen Unterteil (4) kann vorteilhafter weise frei durch die Wahl entsprechender Parameter definiert werden. Es wäre beispielsweise auch denkbar eine höhere Bedämpfung beim Ausfedern einzustellen. Eine solche höhere Bedämpfung beim Ausfedern unterstützt die Betätigung der Pedale des Kraftfahrzeugs durch einen Fahrer der sich auf dem Sitz befindet.

Die erste Dämpfungskraft (12) des Dämpfungselements (6) weist in Abhängigkeit von der Position (13) des sitzteilseitigen Oberteils (3) relativ zu dem karosserieseitigen Unterteil (4) einen Komfortbereich (18) auf, welcher durch eine obere (18a) und eine untere Komfortgrenze (18b) begrenzt ist. In diesem Komfortbereich (18) ist Dämpfungskraft (12) konstant hinsichtlich einer Verlagerung der Position (13) des sitzteilseitigen Oberteils (3) relativ zu dem karosserieseitigen Unterteil (4). Dies ist in den Figuren 2a und 2b zu erkennen. In Figur 2c entspricht die voreingestellte Höhenposition (16) der maximalen voreinstellbaren Höhenposition (16a). In diesem Fall sind die obere (18a) und die untere Komfortgrenze (18b) gleich der Höhenposition (16).

Durch die Regeleinrichtung (5) ist eine zweite Dämpfungskraft (19) des Dämpfungselements (6) einstellbar. Diese zweite Dämpfungskraft (19) ist anhand des Gesamtdämpfungswegs (15), der voreinstellbaren Grunddämpfungskraft, der Position (13) des sitzteilseitigen Oberteils (3) relativ zu dem karosserieseitigen Unterteil (4), der Bewegungsrichtung (14), dem Betrag der Geschwindigkeit und eines Restdämpfungswegs des sitzteilseitigen Oberteils (3) relativ zu dem karosserieseitigen Unterteil (4) bestimmbar. Der Restdämpfungsweg ist aus dem maximalen Dämpfungsweg (15) und der Position (13) des sitzteilseitigen Oberteils (3) relativ zu dem karosserieseitigen Unterteil (4) bestimmbar und, die Geschwindigkeit aus zumindest zwei zeitlich aufeinanderfolgenden Positionen (13) des sitzteilseitigen Oberteils (3) relativ zu dem karosserieseitigen Unterteil (4). Die Gesamtdämpfungskraft des Dämpfungselements (5) ist schließlich aus der Summe von erster (12) und zweiter Dämpfungskraft (19) gegeben. Die zweite Dämpfungskraft (19) kann der ersten Dämpfungskraft (12) gleichgerichtet überlagert werden. Dies ist beispielsweise notwendig wenn nur wenig Restdämpfungsweg zur Verfügung (Position (20) in Fig. 2a) steht. Ein Endanschlag kann somit effektiv vorgebeugt werden. Bei Auftreten eines plötzlichen Stoßes kann die zweite Dämpfungskraft (19) der ersten Dämpfungskraft (12) entgegengerichtet sein, so dass die Gesamtdämpfungskraft weicher geschaltet wird. Dies ist lediglich sinnvoll wenn ausreichend Restdämpfungsweg vorhanden ist (Position (21)). Somit wird das sitzteilseitige Oberteil möglichst gering ausgelenkt.

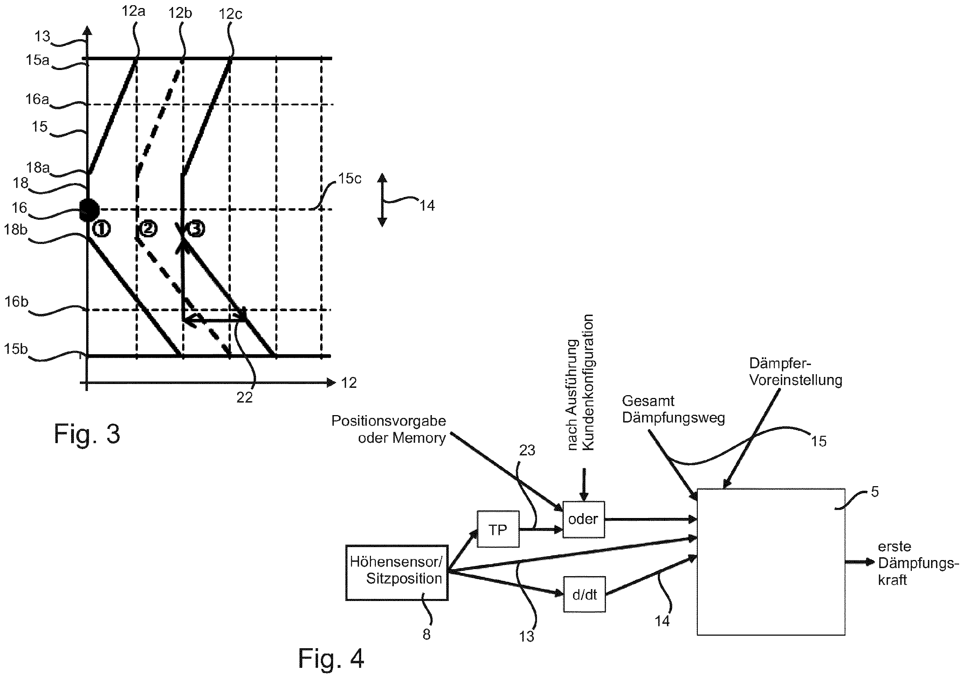

In Fig. 3 ist ein Diagramm analog zu Fig. 2a dargestellt. Darüber hinaus zeigt das Diagramm einen alternativen Rückverlagerungsweg (22) der Position (13) des sitzteilseitigen Oberteils (3). Bei diesem Rückverlagerungsweg (22) ist nur die positionsunabhängige voreingestellte Grunddämpfungskraft wirksam. Eine solche Ausführung hat eine weichere und/oder schnellere Rückführung des sitzteilseitigen Oberteils (3) zur Folge. Gleichzeitig wird das sitzteilseitige Oberteil (3) in seiner Höhe stabilisiert, da dieses weicher in die Ausgangslage zurückfedert.

Fig. 4 zeigt eine Algorithmus-Struktur zur Bestimmung der ersten Dämpfungskraft (12) des Dämpfungselements (6) durch die Regelungsreinrichtung (5). Die Position (13) des sitzteilseitigen Oberteils (3) relativ zu dem karosserieseitigen Unterteil (4) wird durch die Sensoreinrichtung (8) gemessen und der Regelungsreinrichtung (5) zugeführt. Weiterhin wird eine gemittelte Position durch einen Tiefpass- oder Mittelwertbildungsfilter (TP) ermittelt und an die Regelungsreinrichtung (5) übergeben. Dieser Wert stellt den Sollwert der Regelung dar. Ebenso könnte eine Positionsvorgabe aus einem Speicher oder anderweitig vorgegeben werden. Ebenso wird die Bewegungsrichtung (14) der Position (13) der Regeleinrichtung (5) zugeführt. Weiterhin wird die erste Dämpfungskraft (12) anhand einer durch eine Dämpfungs-Einstelleinrichtung (7) voreinstellbaren Grunddämpfungskraft und dem Gesamtdämpfungsweg(15) bestimmt. Die Berechnung der ersten Dämpfungskraft erfolgt dabei anhand einer Kennlinie oder einer Look-Up-Tabelle.

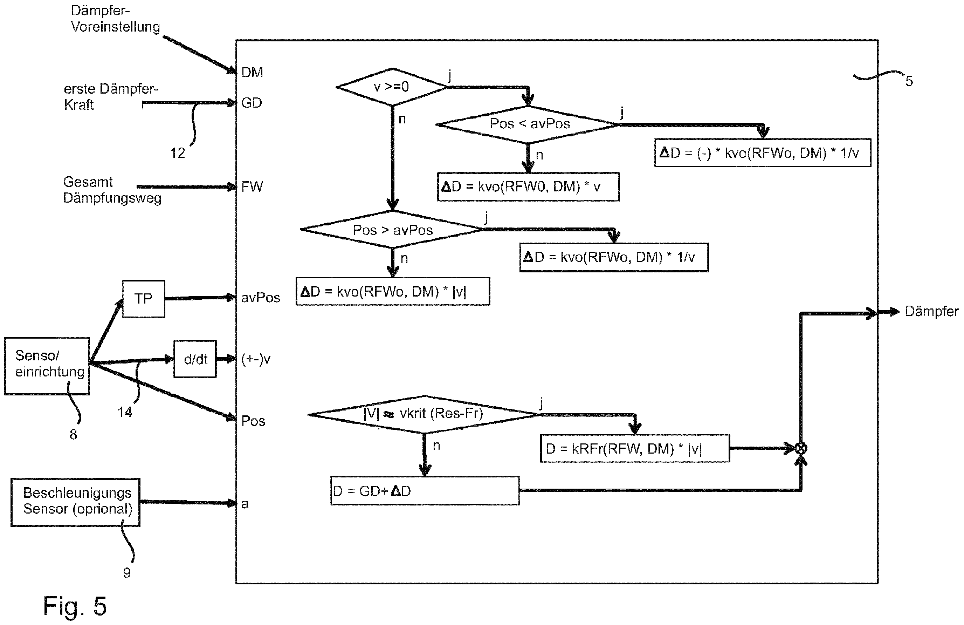

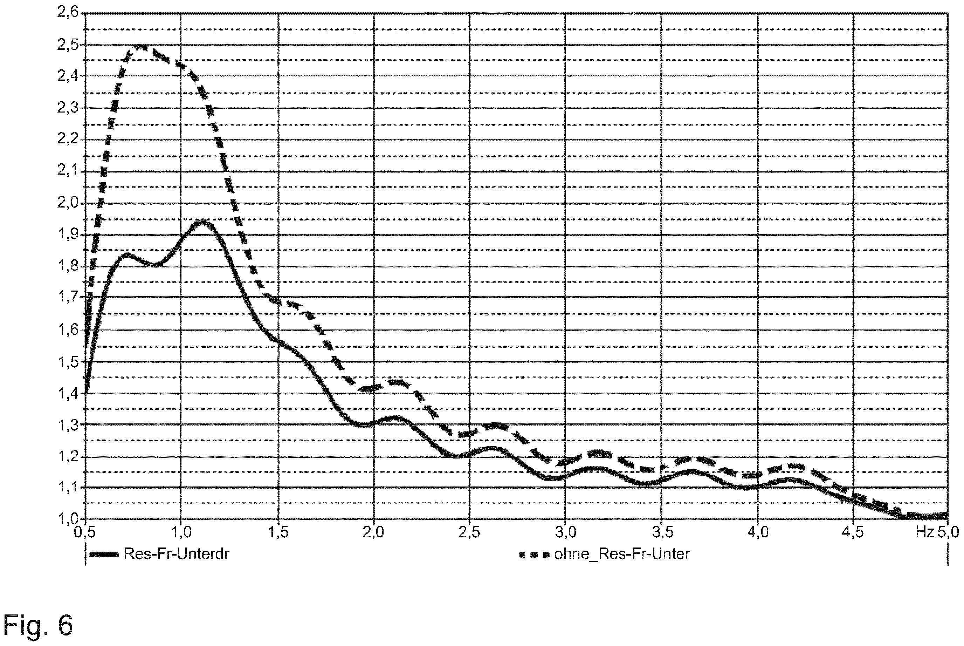

In Fig. 5 wird eine Algorithmus-Struktur zur Bestimmung der zweiten Dämpfungskraft (19, ΔD) des Dämpfungselements (6) durch die Regelreinrichtung (5) dargestellt. Der Regeleinrichtung (5) werden folgende Parameter zugeführt: die Position (13) des sitzteilseitigen Oberteils (3) relativ zu dem karosserieseitigen Unterteil (4) gemessen durch die Sensoreinrichtung (8), durch die Dämpfungs-Einstelleinrichtung (7) voreinstellbare Grunddämpfungskraft (DM), eine gemittelte Position (avPos) durch einen Tiefpass- oder Mittelwertbildungsfilter (TP) ermittelt, Gesamtdämpfungsweg (FW), die erste Dämpfungskraft (12, GD), die Bewegungsrichtung (14) und die Geschwindigkeit (V) des sitzteilseitigen Oberteils (3)relativ zu dem karosserieseitigen Unterteil (4). Optional können auch die Werte eines Beschleunigungssensors (9) mit einbezogen werden. Die zweite Dämpfungskraft (19, ΔD) wird gebildet aus einem ersten Parameter (kvo), welcher eine Funktion des Restdämpfungswegs (RFWo) und der voreinstellbaren Grunddämpfungskraft (DM) ist, und einem Geschwindigkeitsfaktor Vⁿ (n = +- 1). Für den Fall, V >= 0 wird bei einer aktuellen Position (13, Pos), welche größer als die gemittelte Position (avPos) ist, der erste Parameter (kvo) mit dem Betrag der Geschwindigkeit (|V|) multipliziert. Im umgekehrten Fall wird der erste Parameter (kvo) mit der reziproken Geschwindigkeit (1/V) multipliziert. Für den Fall, V< 0 wird bei einer aktuellen Position (13, Pos), welche größer als die gemittelte Position (avPos) ist, der erste Parameter (kvo) mit der reziproken Geschwindigkeit multipliziert (1/V) und im umgekehrten Fall mit dem Betrag der Geschwindigkeit (|V|). Die Gesamtdämpfungskraft (D) bildet sich aus der Summe der ersten Dämpfungskraft (12, GD) und der zweiten Dämpfungskraft (19, ΔD) falls die Geschwindigkeit des sitzteilseitigen Oberteils (3) relativ zu dem karosserieseitigen Unterteil (4) keiner charakteristischen Geschwindigkeit (V_{krit(Res-Fr)}) hinsichtlich einer Resonanzüberhöhung einer Schwingung des sitzteilseitigen Oberteils (3) relativ zu dem karosserieseitigen Unterteil (4) entspricht. Wird eine solche charakteristischen Geschwindigkeit (V_{krit(Res-Fr)}) hinsichtlich einer Resonanzüberhöhung durch die Regeleinrichtung (5) identifiziert, ist die Gesamtdämpfungskraft (D) durch das Produkt aus dem Betrag der Geschwindigkeit (V) und einem zweiten Parameter (kRFr), welcher ebenfalls eine Funktion des Restdämpfungswegs (RFWo) und der voreinstellbaren Grunddämpfungskraft (DM) ist gegeben. Der zweite Parameter (kRFr) ist größer als der erste Parameter (kvo), so dass bei einer charakteristischen Geschwindigkeit eine erhöhte Dämpfung eingestellt wird. In der Algorithmus-Struktur aus Fig. 5 sind die entsprechenden Gesamtdämpfungskräfte (D), d.h. im Resonanzfall bzw. außerhalb der Resonanz durch eine oder-Verknüpfung verbunden. Demzufolge wird die entsprechende Gesamtdämpfungskraft (D) abhängig von der charakteristischen Geschwindigkeit (V_{krit(Res-Fr)}) am Dämpfer eingestellt. Fig. 6 zeigt die Schwingungsamplitude in Abhängigkeit der Schwingungsfrequenz des sitzteilseitigen Oberteils (3) für den Fall mit und ohne einer Unterdrückung des Resonanzverhaltens. Eine typische Resonanzüberhöhung von einem Faktor von ca. 2,5 kann somit auf unter 1,5 reduziert werden.

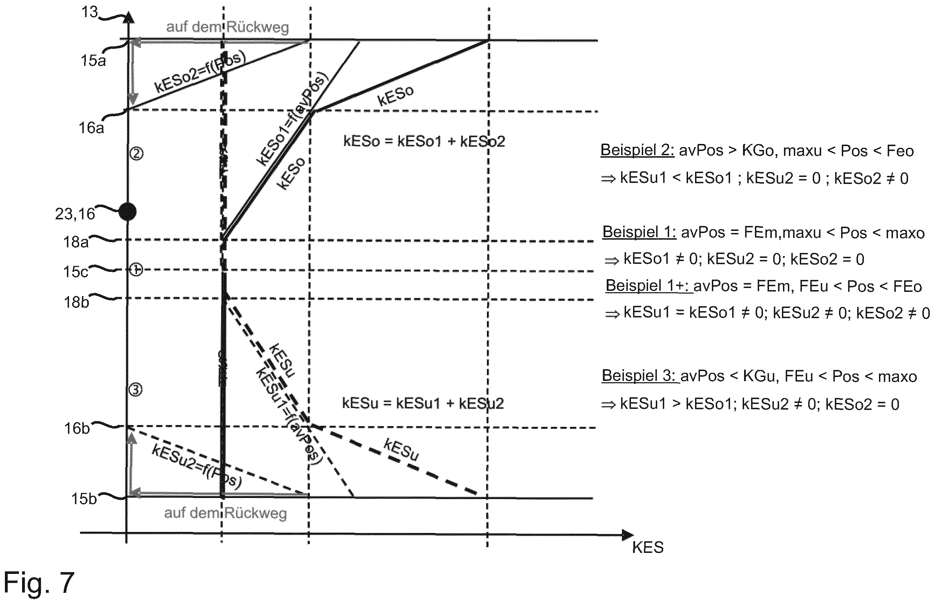

In Fig. 7 ein Diagramm der Dämpfungskraft in Abhängigkeit von der Position des sitzteilseitigen Oberteils relativ zu dem karosserieseitigen Unterteil gemäß einer weiteren Ausführungsform. In dem Diagramm beschreibt die Abszisse den dritten Parameter kES dar und die Ordinate die Position (13) des sitzteilseitigen Oberteils (3) relativ zu dem karosserieseitigen Unterteil (4). Gemäß dieser Ausführungsform gilt für die Dämpfungskraft D = kES·Vⁿ. Der dritte Parameter kES ist eine Funktion von: oberes Dämpfungswegende (15a, FEo), unteres Dämpfungswegende (15b, FEu), Dämpfungswegmitte (15c, FEm), maximale Höhenposition (16a, maxo), minimale Höhenposition (16b, minu), obere Komfortgrenze (18a, KGo), untere Komfortgrenze (18b, KGu), gemittelte Position (23, avPos), aktuelle Position (13, Pos), voreingestellte Grunddämpfungskraft (DM) und der Bewegungsrichtung (14, sgn(V)). Der Exponent n ist im Bereich zwischen 0...∞. Bei n=0 ist D unabhängig vom Betrag der Geschwindigkeit und entspricht der ersten Dämpfungskraft. Bei 0<n<1 weist das Dämpfungssystem (1) eine degressive Charakteristik auf und bei n>=1 eine progressive Charakteristik. Bei einem festgelegten Exponenten n bestimmt der dritte Parameter kES die Charakteristik der Dämpfungskraft. Für V>=0 gilt: kES = kESo und für V<0 gilt: kES = kESu. Der dritte Parameter kES setzt sich aus zwei Bestandteilen zusammen: kES=kES1+kES2 (kESo=kESo1+ kESo2, kESu=kESu1 + kESu2), wobei kES2 lediglich bei einer Position in einem Bereich zwischen der maximale Höhenposition (16a, maxo) und dem oberen Dämpfungswegende (15a, FEo) und in einem Bereich zwischen minimaler Höhenposition (16b, maxu) und unterem unteres Dämpfungswegende (15b, FEu) ungleich 0 ist. Überschreitet die aktuelle Position (13, Pos) des sitzteilseitigen Oberteils (3) die maximale Höhenposition (16a, maxo) bzw. die minimale Höhenposition (16b, maxu) wird kES in Folge der kES2-Anteile höher. Die Dämpfungskraft wird somit um einen Endanschlagschutzfaktor kES2 erhöht, wodurch ein Endanschlag des sitzteilseitigen Oberteils (3) effektiv vermieden werden kann. Um den Komfort zu erhöhen sollte das sitzteilseitige Oberteil (3) möglichst schnell in die gemittelte Position (23) bzw. auf den Sollwert der Regelung zurückgeführt werden. Demnach wird bei der Rückbewegung der kES2-Anteil auf 0 gesetzt.

### Bezugszeichenliste

- 1: Regelbares Dämpfungssystem
- 2: Fahrzeugsitz
- 3: sitzteilseitiges Oberteil
- 4: karosserieseitiges Unterteil
- 5: Regelreinrichtung
- 6: Dämpfungselement
- 7: Dämpfungs-Einstelleinrichtung
- 8: Sensoreinrichtung
- 9: Beschleunigungssensor
- 10: Federelement
- 11: Scherengestell
- 12: erste Dämpfungskraft
- 12a: erste Dämpfungskraft in Abhängigkeit von einer ersten voreinstellbaren Grunddämpfungskraft
- 12b: erste Dämpfungskraft in Abhängigkeit von einer zweiten voreinstellbaren Grunddämpfungskraft
- 12c: erste Dämpfungskraft in Abhängigkeit von einer dritten voreinstellbaren Grunddämpfungskraft
- 13: Position des sitzteilseitigen Oberteils
- 14: Bewegungsrichtung
- 15: maximaler Dämpfungsweg
- 15a: oberes Dämpfungswegende
- 15b: unteres Dämpfungswegende
- 15c: Gesamtdämpfungswegmitte
- 16: Höhenposition
- 16a: maximale Höhenposition
- 16b: minimale Höhenposition
- 17: Höhen-Einstelleinrichtung
- 18: Komfortbereich
- 18a: obere Komfortgrenze
- 18b: untere Komfortgrenze
- 19: zweite Dämpfungskraft
- 20: Position sitzteilseitiges Oberteil relativ karosserieseitiges Unterteil
- 21: Position sitzteilseitiges Oberteil relativ karosserieseitiges Unterteil
- 22: Rückverlagerungsweg
- 23: Gemittelte Position
- 24a: Beispielposition 1
- 24b: Beispielposition 2
- 24c: Beispielposition 3
- DM: voreinstellbare Grunddämpfungskraft
- GD: erste Dämpfungskraft
- FW: Gesamtdämpfungsweg
- Pos: Position des sitzteilseitiges Oberteil relativ karosserieseitiges Unterteil
- avPos: gemittelte Position des sitzteilseitiges Oberteil relativ karosserieseitiges Unterteil
- D: Gesamtdämpfungskraft
- ΔD: zweite Dämpfungskraft
- V: Geschwindigkeit
- RFWo: Restdämpfungsweg
- TP: Tiefpass- oder Mittelwertbildungsfilter
- V_{krit(Res-Fr)}: charakteristischen Geschwindigkeit
- kvo: erster Parameter
- kRFr: zweiter Parameter
- kES: dritter Parameter
- kES2: Endanschlagschutzfaktor
- FEo: oberes Dämpfungswegende
- FEu: unteres Dämpfungswegende
- FEm: Dämpfungswegmitte
- maxo: maximale Höhenposition
- maxu: minimale Höhenposition
- KGo: obere Komfortgrenze
- KGu: untere Komfortgrenze
- X, Y, Z: Raumrichtungen

## Patentansprüche

1. Regelbares Dämpfungssystem (1) für einen Fahrzeugsitz (2) zum Dämpfen einer Bewegung eines sitzteilseitigen Oberteils (3) relativ zu einem karosserieseitigen Unterteil (4) in wenigstens einer Raumrichtung (X, Y, Z), wobei zum Dämpfen mindestens ein zwischen dem sitzteilseitigen Oberteil (3) und dem karosserieseitigen Unterteil (4) angeordnetes durch eine Regeleinrichtung (5) regelbares Dämpfungselement (6) vorgesehen ist,
**dadurch gekennzeichnet, dass**
eine erste Dämpfungskraft (12) des Dämpfungselements (6) durch die Regelreinrichtung (5) einstellbar ist, wobei diese erste Dämpfungskraft (12) durch die Regeleinrichtung (5), anhand eines Gesamtdämpfungswegs (15) des Dämpfungselements (6), einer durch eine Dämpfungs-Einstelleinrichtung (7) voreinstellbaren Grunddämpfungskraft, einer durch eine Sensoreinrichtung (8) messbaren Position (13) des sitzteilseitigen Oberteils (3) relativ zu dem karosserieseitigen Unterteil (4) und einer Bewegungsrichtung (14) des sitzteilseitigen Oberteils (3) relativ zu dem karosserieseitigen Unterteil (4) und unabhängig von einem Betrag einer Geschwindigkeit, bestimmbar ist, so dass die erste Dämpfungskraft demnach unabhängig vom Betrag der Geschwindigkeit, aber abhängig von der Bewegungsrichtung und der aktuellen Position des sitzteilseitigen Oberteils relativ zu dem karosserieseitigen Unterteil, einstellbar ist, wobei die Bewegungsrichtung (14) aus zumindest zwei durch die Sensoreinrichtung (8) messbaren, zeitlich aufeinanderfolgenden Positionen (13) des sitzteilseitigen Oberteils (3) relativ zu dem karosserieseitigen Unterteil (4) bestimmbar ist.

2. Regelbares Dämpfungssystem (1) nach Anspruch 1,
**dadurch gekennzeichnet, dass**
eine maximale Verlagerung der Position (13) des sitzteilseitigen Oberteils (3) relativ zu dem karosserieseitigen Unterteil (4) durch den Gesamtdämpfungsweg (15) des Dämpfungselements (6) gegeben ist, welcher durch ein oberes (15a) und ein unteres Dämpfungswegende (15b) begrenzt ist, und eine den Sollwert der Regelung darstellende Höhenposition (16) des sitzteilseitigen Oberteils (3) relativ zu dem karosserieseitigen Unterteil (4) durch eine Höhen-Einstelleinrichtung (17) einstellbar ist, wobei eine maximal einstellbare Höhenposition (16a) in einem Bereich des Gesamtdämpfungswegs (15) liegt, welcher sich zwischen einer Gesamtdämpfungswegmitte (15c) und dem oberen Dämpfungswegende (15a) erstreckt und wobei eine minimal einstellbare Höhenposition (16b) in einem Bereich des Gesamtdämpfungswegs (15) liegt, welcher sich zwischen einer Gesamtdämpfungswegmitte (15c) und dem unteren Dämpfungswegende (15a) erstreckt.

3. Regelbares Dämpfungssystem (1) nach Anspruch 2,
**dadurch gekennzeichnet, dass**
bei einer Verlagerung der Position (13) des sitzteilseitigen Oberteils (3) ausgehend von der Höhenposition (16), die durch die Regeleinrichtung (5) einstellbare erste Dämpfungskraft (12) des Dämpfungselements (6) innerhalb eines Komfortbereichs (18) des Gesamtdämpfungswegs (15) kleiner ist als außerhalb des Komfortbereichs(18), wobei der Komfortbereich (18) durch eine obere (18a) und eine untere Komfortgrenze (18b) begrenzt ist, wobei der Komfortbereich (18) ein Teilbereich des Bereichs des Gesamtdämpfungswegs (15) ist, welcher durch die maximal einstellbare Höhenposition (16a) und die minimal einstellbare Höhenposition (16b) begrenzt ist, wobei erste Dämpfungskraft (12) innerhalb des Komfortbereichs (18) konstant oder mit dem Abstand zwischen der Position des sitzteilseitigen Oberteils und der Höhenposition ansteigend oder fallend ist, wobei bei einer Verlagerung der Position (13) des sitzteilseitigen Oberteils (3) ausgehend von der maximalen (16a) oder der minimalen Höhenposition (16b) der Komfortbereich (18) auf die maximale (16a) beziehungsweise die minimale Höhenposition (16b) beschränkt ist.

4. Regelbares Dämpfungssystem (1) nach Anspruch 2 oder 3,
**dadurch gekennzeichnet, dass**
bei einer Verlagerung der Position (13) des sitzteilseitigen Oberteils (3), ausgehend von der Höhenposition (16), die durch die Regeleinrichtung (5) einstellbare erste Dämpfungskraft (12) des Dämpfungselements (6), außerhalb des Komfortbereichs (18), des Gesamtdämpfungswegs (15) linear mit dem Abstand zwischen der Position (13) des sitzteilseitigen Oberteils (3) und der Höhenposition (16) anwächst.

5. Regelbares Dämpfungssystem (1) nach einem der vorhergehenden Ansprüche,
**dadurch gekennzeichnet, dass**
bei einer Verlagerung der Position (13) des sitzteilseitigen Oberteils (3), in Richtung zu der Höhenposition (16), durch die Regeleinrichtung (5) eine Dämpfungskraft des Dämpfungselements (6) einstellbar ist, welche lediglich der voreingestellten Grunddämpfungskraft entspricht.

6. Regelbares Dämpfungssystem (1) nach einem der vorhergehenden Ansprüche,
**dadurch gekennzeichnet, dass**
durch die Regeleinrichtung (5) eine zweite Dämpfungskraft (19) des Dämpfungselements (6) einstellbar ist, wobei diese zweite Dämpfungskraft (19) anhand des Gesamtdämpfungswegs (15), der voreinstellbaren Grunddämpfungskraft, der Position (13) des sitzteilseitigen Oberteils (3) relativ zu dem karosserieseitigen Unterteil (4), der Bewegungsrichtung (14), dem Betrag der Geschwindigkeit und eines Restdämpfungswegs des sitzteilseitigen Oberteils (3) relativ zu dem karosserieseitigen Unterteil (4) bestimmbar ist, wobei der Restdämpfungsweg aus dem Gesamtdämpfungsweg (15) und der Position (13) des sitzteilseitigen Oberteils (3) relativ zu dem karosserieseitigen Unterteil (4) bestimmbar ist, wobei die Geschwindigkeit aus zumindest zwei zeitlich aufeinanderfolgenden Positionen (13) des sitzteilseitigen Oberteils (3) relativ zu dem karosserieseitigen Unterteil (4) bestimmbar ist und wobei eine Gesamtdämpfungskraft des Dämpfungselements (5) aus der Summe von erster (12) und zweiter Dämpfungskraft (19) gegeben ist.

7. Regelbares Dämpfungssystem (1) nach einem der vorhergehenden Ansprüche,
**dadurch gekennzeichnet, dass**
bei einer Verlagerung der Position (13) des sitzteilseitigen Oberteils (3), ausgehend von der maximalen Höhenposition (16a) in Richtung des oberen Dämpfungswegendes (15a) oder bei einer Verlagerung der Position (13) des sitzteilseitigen Oberteils (3), ausgehend von der minimalen Höhenposition (16b) in Richtung des unteren Dämpfungswegendes (15b) durch die Regeleinrichtung (5) eine Dämpfungskraft des Dämpfungselements (6) einstellbar, welche um einen Endanschlagschutzfaktor erhöht ist, wobei bei einer Verlagerung der Position (13) des sitzteilseitigen Oberteils (3) in entgegengesetzter Richtung durch die Regeleinrichtung (5) eine Dämpfungskraft des Dämpfungselements ohne Endanschlagschutzfaktor einstellbar ist.

8. Regelbares Dämpfungssystem (1) nach einem der vorhergehenden Ansprüche,
**dadurch gekennzeichnet, dass**
durch die Regeleinrichtung (5) charakteristische Geschwindigkeiten hinsichtlich einer Resonanzüberhöhung einer Schwingung des sitzteilseitigen Oberteils (3) relativ zu dem karosserieseitigen Unterteil (4) identifizierbar sind, wobei bei Identifikation einer charakteristische Geschwindigkeit eine erhöhte Dämpfungskraft einstellbar ist.

9. Regelbares Dämpfungssystem (1) nach einem der vorhergehenden Ansprüche,
**dadurch gekennzeichnet, dass**
das regelbare Dämpfungssystem (1) einen Beschleunigungssensor (9) umfasst.

10. Fahrzeugsitz (2) mit einem regelbaren Dämpfungssystem (1) nach einem der vorhergehenden Ansprüche.

11. Verfahren zum Regeln eines regelbaren Dämpfungssystems (1) für einen Fahrzeugsitz (2) zum Dämpfen einer Bewegung eines sitzteilseitigen Oberteils (3) relativ zu einem karosserieseitigen Unterteil (4) in wenigstens einer Raumrichtung (X, Y, Z), wobei zum Dämpfen mindestens ein zwischen dem sitzteilseitigen Oberteil (3) und dem karosserieseitigen Unterteil (4) angeordnetes durch eine Regeleinrichtung (5) regelbares Dämpfungselement (6), vorgesehen ist, wobei das Verfahren folgende Schritte umfasst:
Messen der aktuellen Position (13) des sitzteilseitigen Oberteils (3) relativ zu dem karosserieseitigen Unterteil (4) durch eine Sensoreinrichtung (8);
Bestimmen einer Bewegungsrichtung des sitzteilseitigen Oberteils (3) relativ zu dem karosserieseitigen Unterteil (4) durch die Regeleinrichtung (5) aus zumindest zwei zeitlich aufeinanderfolgend gemessenen Positionen (13) des sitzteilseitigen Oberteils (3) relativ zu dem karosserieseitigen Unterteil (4);
Einstellen einer ersten Dämpfungskraft (12) des Dämpfungselements (6) durch die Regeleinrichtung (5), wobei die erste Dämpfungskraft (12) durch die Regeleinrichtung (5) in Abhängigkeit von einem Gesamtdämpfungsweg (15), der voreinstellten Grunddämpfungskraft, der Position (13) des sitzteilseitigen Oberteils (3) relativ zu dem karosserieseitigen Unterteil (4) und der Bewegungsrichtung (14) des sitzteilseitigen Oberteils (3) relativ zu dem karosserieseitigen Unterteil (4) und unabhängig von einem Betrag einer Geschwindigkeit bestimmt wird, so dass die erste Dämpfungskraft demnach unabhängig vom Betrag der Geschwindigkeit, aber abhängig von der Bewegungsrichtung und der aktuellen Position des sitzteilseitigen Oberteils relativ zu dem karosserieseitigen Unterteil, einstellbar ist.

## Claims

1. Variable damping system (1) for a vehicle seat (2) for damping a movement of a seat part-side upper part (3) relative to a body-side lower part (4) in at least one spatial direction (X, Y, Z), wherein, for damping, at least one damping element (6) is provided, which is adjustable by an adjustment device (5) and is arranged between the seat part-side upper part (3) and the body-side lower part (4), **characterised in that** a first damping force (12) of the damping element (6) is settable by the adjustment device (5), wherein this first damping force (12) can be determined by the adjustment device (5) with the aid of a total damping travel (15) of the damping element (6), a basic damping force presettable by a damping setting device (7), a position (13) of the seat part-side upper part (3), measurable by a sensor device (8), relative to the body-side lower part (4) and a movement direction (14) of the seat part-side upper part (3) relative to the body-side lower part (4) and independent of the amount of speed, so that the first damping force is thus settable independent of the amount of speed, but depending on the movement direction and the current position of the seat part-side upper part relative to the body-side lower part, wherein the movement direction (14) can be determined from at least two temporally consecutive positions (13) of the seat part-side upper part (3), measurable by the sensor device (8), relative to the body-side lower part (4).

2. Variable damping system (1) according to claim 1, **characterised in that** a maximum displacement of the position (13) of the seat part-side upper part (3) relative to the body-side lower part (4) is provided by the total damping travel (15) of the damping element (6), which is limited by an upper (15a) and a lower damping travel end (15b), and a height position (16) of the seat part-side upper part (3), being the desired value of the adjustment, is settable relative to the body-side lower part (4) by a height setting device (17), wherein a maximum settable height position (16a) is in a range of the total damping travel (15), which extends between a total damping travel centre (15c) and the upper damping travel end (15a), and wherein a minimum settable height position (16b) is in a range of the total damping travel (15), which extends between a total damping travel centre (15c) and the lower damping travel end (15a).

3. Variable damping system (1) according to claim 2, **characterised in that** upon a displacement of the position (13) of the seat part-side upper part (3), proceeding from the height position (16), the first damping force (12) of the damping element (6), settable by the adjustment device (5), within the comfort range (18) of the total damping travel (15), is smaller than outside the comfort range (18), wherein the comfort range (18) is limited by an upper (18a) and a lower comfort limit (18b), wherein the comfort range (18) is a part range of the range of the total damping travel (15), which is limited by the maximum settable height position (16a) and the minimum settable height position (16b), wherein the first damping force (12) within the comfort range (18) is constant or increasing or falling with the spacing between the position of the seat part-side upper part and the height position, wherein, upon a displacement of the position (13) of the seat part-side upper part (3), proceeding from the maximum (16a) or the minimum height position (16b), the comfort range (18) is limited to the maximum (16a) or the minimum height position (16b).

4. Variable damping system (1) according to either claim 2 or claim 3, **characterised in that**, upon a displacement of the position (13) of the seat part-side upper part (3), proceeding from the height position (16), the first damping force (12) of the damping element (6), settable by the adjustment device (5), outside the comfort range (18) of the total damping travel (15), increases linearly with the spacing between the position (13) of the seat part-side upper part (3) and the height position (16).

5. Variable damping system (1) according to any of the preceding claims, **characterised in that**, upon a displacement of the position (13) of the seat part-side upper part (3), in the direction of the height position (16), a damping force of the damping element (6), which only corresponds to the preset basic damping force, is settable by the adjustment device (5).

6. Variable damping system (1) according to any of the preceding claims, **characterised in that** a second damping force (19) of the damping element (6) is settable by the adjustment device (5), wherein this second damping force (19) can be determined with the aid of the total damping travel (15), the presettable basic damping force, the position (13) of the seat part-side upper part (3) relative to the body-side lower part (4), the movement direction (14), the amount of speed and a residual damping travel of the seat part-side upper part (3) relative to the body-side lower part (4), wherein the residual damping travel can be determined from the total damping travel (15) and the position (13) of the seat part-side upper part (3) relative to the body-side lower part (4), wherein the speed can be determined from at least two temporally consecutive positions (13) of the seat part-side upper part (3) relative to the body-side lower part (4) and wherein a total damping force of the damping element (5) is provided from the sum of the first (12) and second damping force (19).

7. Variable damping system (1) according to any of the preceding claims, **characterised in that**, upon a displacement of the position (13) of the seat part-side upper part (3), proceeding from the maximum height position (16a) in the direction of the upper damping travel end (15a), or upon a displacement of the position (13) of the seat part-side upper part (3), proceeding from the minimum height position (16b) in the direction of the lower damping travel end (15b), a damping force of the damping element (6) is settable by the adjustment device (5), which damping force is increased by an end impact protection factor, wherein, upon a displacement of the position (13) of the seat part-side upper part (3) in the opposite direction, a damping force of the damping element is settable by the adjustment device (5) without an end impact protection factor.

8. Variable damping system (1) according to any of the preceding claims, **characterised in that** characteristic speeds with regard to a resonance superelevation of a vibration of the seat part-side upper part (3) relative to the body-side lower part (4) can be identified by the adjustment device (5), wherein, upon identification of a characteristic speed, an increased damping force is settable.

9. Variable damping system (1) according to any of the preceding claims, **characterised in that** the variable damping system (1) comprises an acceleration sensor (9).

10. Vehicle seat (2) having a variable damping system (1) according to any of the preceding claims.

11. Method for adjusting a variable damping system (1) for a vehicle seat (2) for damping a movement of a seat part-side upper part (3) relative to a body-side lower part (4) in at least one spatial direction (X, Y, Z), wherein, for damping, at least one damping element (6) is provided, which is adjustable by an adjustment device (5) and is arranged between the seat part-side upper part (3) and the body-side lower part (4), wherein the method comprises the following steps:
measuring the current position (13) of the seat part-side upper part (3) relative to the body-side lower part (4) by a sensor device (8);
determining a movement direction of the seat part-side upper part (3) relative to the body-side lower part (4) by the adjustment device (5) from at least two temporally consecutively measured positions (13) of the seat part-side upper part (3) relative to the body-side lower part (4);
setting a first damping force (12) of the damping element (6) by the adjustment device (5), wherein the first damping force (12) is determined by the adjustment device (5) depending on a total damping travel (15), the preset basic damping force, the position (13) of the seat part-side upper part (3) relative to the body-side lower part (4) and the movement direction (14) of the seat part-side upper part (3) relative to the body-side lower part (4), and independently of the amount of speed, so that the first damping force is thus settable independent of the amount of speed, but depending on the movement direction and the current position of the seat part-side upper part relative to the body-side lower part.

## Revendications

1. Système d'amortissement réglable (1) pour un siège de véhicule (2) pour l'amortissement d'un déplacement d'une partie supérieure côté partie siège (3) par rapport à une partie inférieure côté carrosserie (4) dans au moins une direction spatiale (X, Y, Z), dans lequel, pour l'amortissement, est prévu au moins un élément d'amortissement (6), disposé entre la partie supérieure côté partie siège (3) et la partie inférieure côté carrosserie (4), réglable par un dispositif de réglage (5), **caractérisé par le fait qu'**
une première force d'amortissement (12) de l'élément d'amortissement (6) est ajustable par le dispositif de réglage (5), cette première force d'amortissement (12) étant déterminable par le dispositif de réglage (5) sur la base d'une course d'amortissement totale (15) de l'élément d'amortissement (6), d'une force d'amortissement de base pré-ajustable par un dispositif d'ajustement d'amortissement (7), d'une position (13), mesurable par un dispositif de détection (8), de la partie supérieure côté partie siège (3), par rapport à la partie inférieure côté carrosserie (4), et d'une direction de déplacement (14) de la partie supérieure côté partie siège (3) par rapport à la partie inférieure côté carrosserie (4), et indépendamment d'une valeur d'une vitesse, de telle sorte que la première force d'amortissement est ainsi ajustable indépendamment de la valeur de la vitesse, mais en fonction de la direction de déplacement et de la position courante de la partie supérieure côté partie siège par rapport à la partie inférieure côté carrosserie, la direction de déplacement (14) étant déterminable à partir d'au moins deux positions (13) se succédant dans le temps, mesurables par le dispositif de détection (8), de la partie supérieure côté partie siège (3) par rapport à la partie inférieure côté carrosserie (4).

2. Système d'amortissement réglable (1) selon la revendication 1,
**caractérisé par le fait qu'**
un déplacement maximal de la position (13) de la partie supérieure côté partie siège (3) par rapport à la partie inférieure côté carrosserie (4) est donné par la course d'amortissement totale (15) de l'élément d'amortissement (6), laquelle est délimitée par une fin de course d'amortissement supérieure (15a) et une fin de course d'amortissement inférieure (15b), et une position en hauteur (16), représentant la valeur de consigne du réglage, de la partie supérieure côté partie siège (3) par rapport à la partie inférieure côté carrosserie (4) est ajustable par un dispositif de réglage de hauteur (17), une position en hauteur ajustable au maximum (16a) se situant dans une plage de la course d'amortissement totale (15), laquelle s'étend entre un centre de course d'amortissement totale (15c) et la fin de course d'amortissement supérieure (15a), et une position en hauteur ajustable au minimum (16b) se situant dans une plage de la course d'amortissement totale (15), laquelle s'étend entre un centre de course d'amortissement totale (15c) et la fin de course d'amortissement inférieure (15a).

3. Système d'amortissement réglable (1) selon la revendication 2,
**caractérisé par le fait que**
lors d'un déplacement de la position (13) de la partie supérieure côté partie siège (3), à partir de la position en hauteur (16), la première force d'amortissement (12), ajustable par le dispositif de réglage (5), de l'élément d'amortissement (6), est plus petite à l'intérieur d'une plage de confort (18) de la course d'amortissement totale (15) qu'à l'extérieur de la plage de confort (18), la plage de confort (18) étant délimitée par une limite de confort supérieure (18a) et une limite de confort inférieure (18b), la plage de confort (18) étant une sous-plage de la plage de la course d'amortissement totale (15), laquelle est délimitée par la position en hauteur ajustable au maximum (16a) et la position en hauteur ajustable au minimum (16b), la première force d'amortissement (12) étant constante à l'intérieur de la plage de confort (18) ou augmentant ou diminuant avec la distance entre la position de la partie supérieure côté partie siège et la position en hauteur, où, lors d'un déplacement de la position (13) de la partie supérieure côté partie siège (3), à partir de la position en hauteur maximale (16a) ou minimale (16b), la plage de confort (18) est limitée à la position en hauteur maximale (16a), respectivement à la position en hauteur minimale (16b).

4. Système d'amortissement réglable (1) selon l'une des revendications 2 et 3,
**caractérisé par le fait que**
lors d'un déplacement de la position (13) de la partie supérieure côté partie siège (3), à partir de la position en hauteur (16), la première force d'amortissement (12), ajustable par le dispositif de réglage (5), de l'élément d'amortissement (6), augmente linéairement à l'extérieur de la plage de confort (18) de la course d'amortissement totale (15), avec la distance entre la position (13) de la partie supérieure côté partie siège (3) et la position en hauteur (16).

5. Système d'amortissement réglable (1) selon l'une des revendications précédentes,
**caractérisé par le fait que**
lors d'un déplacement de la position (13) de la partie supérieure côté partie siège (3), en direction de la position en hauteur (16), par le dispositif de réglage (5), une force d'amortissement de l'élément d'amortissement (6) est ajustable, laquelle correspond simplement à la force d'amortissement de base pré-ajustée.

6. Système d'amortissement réglable (1) selon l'une des revendications précédentes,
**caractérisé par le fait que**
par le dispositif de réglage (5), une deuxième force d'amortissement (19) de l'élément d'amortissement (6) est ajustable, cette deuxième force d'amortissement (19) étant déterminable sur la base de la course d'amortissement totale (15), de la force d'amortissement de base pré-ajustable, de la position (13) de la partie supérieure côté partie siège (3) par rapport à la partie inférieure côté carrosserie (4), de la direction de déplacement (14), de la valeur de la vitesse et d'une course d'amortissement restante de la partie supérieure côté siège (3) par rapport à la partie inférieure côté carrosserie (4), la course d'amortissement restante étant déterminable à partir de la course d'amortissement totale (15) et de la position (13) de la partie supérieure côté partie siège (3) par rapport à la partie inférieure côté carrosserie (4), la vitesse étant déterminable à partir d'au moins deux positions (13) se succédant dans le temps de la partie supérieure côté partie siège (3) par rapport à la partie inférieure côté carrosserie (4), et une force d'amortissement totale de l'élément d'amortissement (5) étant donnée à partir de la somme de la première (12) et de la deuxième force d'amortissement (19).

7. Système d'amortissement réglable (1) selon l'une des revendications précédentes,
**caractérisé par le fait que**
lors d'un déplacement de la position (13) de la partie supérieure côté partie siège (3), à partir de la position en hauteur maximale (16a) en direction de la fin de course d'amortissement supérieure (15a), ou lors d'un déplacement de la position (13) de la partie supérieure côté partie siège (3), à partir de la position en hauteur minimale (16b) en direction de la fin de course d'amortissement inférieure (15b), par le dispositif de réglage (5), une force d'amortissement de l'élément d'amortissement (6) est ajustable, laquelle est augmentée par un facteur de protection d'impact de fin, où, lors d'un déplacement de la position (13) de la partie supérieure côté siège (3) en direction opposée, par le dispositif de réglage (5), une force d'amortissement de l'élément d'amortissement sans facteur de protection d'impact de fin est ajustable.

8. Système d'amortissement réglable (1) selon l'une des revendications précédentes,
**caractérisé par le fait que**
par le dispositif de réglage (5), des vitesses caractéristiques en ce qui concerne une suraugmentation de résonance d'une vibration de la partie supérieure côté partie siège (3) par rapport à la partie inférieure côté carrosserie (4) sont identifiables, où, lors de l'identification d'une vitesse caractéristique, une force d'amortissement accrue est ajustable.

9. Système d'amortissement réglable (1) selon l'une des revendications précédentes,
**caractérisé par le fait que**
le système d'amortissement réglage (1) comporte un détecteur d'accélération (9).

10. Siège de véhicule (2) comportant un système d'amortissement réglage (1) selon l'une des revendications précédentes.

11. Procédé de réglage d'un système d'amortissement réglable (1) pour un siège de véhicule (2) pour l'amortissement d'un déplacement d'une partie supérieure côté partie siège (3) par rapport à une partie inférieure côté carrosserie (4) dans au moins une direction spatiale (X, Y, Z), dans lequel, pour l'amortissement, est prévu au moins un élément d'amortissement (6) disposé entre la partie supérieure côté partie siège (3) et la partie inférieure côté carrosserie (4), réglable par un dispositif de réglage (5), le procédé comprenant les étapes suivantes :
mesure de la position courante (13) de la partie supérieure côté partie siège (3) par rapport à la partie inférieure côté carrosserie (4) par un dispositif de détection (8) ;
détermination d'une direction de déplacement de la partie supérieure côté partie siège (3) par rapport à la partie inférieure côté carrosserie (4) par le dispositif de réglage (5) à partir d'au moins deux positions mesurées (13), se succédant dans le temps, de la partie supérieure côté partie siège (3) par rapport à la partie inférieure côté carrosserie (4) ;
ajustement d'une première force d'amortissement (12) de l'élément d'amortissement (6) par le dispositif de réglage (5), la première force d'amortissement (12) étant déterminée par le dispositif de réglage (5) en fonction d'une course d'amortissement totale (15), de la force d'amortissement de base pré-ajustée, de la position (13) de la partie supérieure côté partie siège (3) par rapport à la partie inférieure côté carrosserie (4) et de la direction de déplacement (14) de la partie supérieure côté partie siège (3) par rapport à la partie inférieure côté carrosserie (4) et indépendamment d'une valeur d'une vitesse, de telle sorte que la première force d'amortissement est ainsi ajustable indépendamment de la valeur de la vitesse, mais en fonction de la direction de déplacement et de la position courante de la partie supérieure côté partie siège par rapport à la partie inférieure côté carrosserie.
